# EUROPEAN PATENT APPLICATION

(11) **EP 2 634 908 A1**
(43) Date of publication of application: **04.09.2013**
(21) Application number: 12382080.5
(22) Date of filing: 02.03.2012
(51) Int. Cl.: H02M 7/487

(54) **Method for controlling the DC- voltage balance in a multi-level inverter and multi-level inverter**

(71) Applicant: Ingeteam Power Technology, S.A., 48170 Zamudio (ES)
(72) Inventor: Milicua Urcelai, Aritz, 48170 Zamudio (ES); Oteiza Izcue, David, 48170 Zamudio (ES); Chivite Zabalza, Francisco Javier, 48170 Zamudio (ES); Madariaga Zubimendi, Danel, 48170 Zamudio (ES); Alvarez Hidalgo, Silverio, 48170 Zamudio (ES)
(74) Representative: Igartua, Ismael

(57) **Abstract**

Method for controlling the dc-voltage balance at a neutral point clamped multi level inverter (100). The inverter is space vecotr controlled with a selective harmonic elimination modulation. Some vectors can be achieved by different switching patterns, resulting in different current direction at the neutral point (0). The respective switching patterns are choosen to control the voltage level at the neutral point.

## Description

### TECHNICAL FIELD

The invention relates to methods for controlling voltage imbalance on the direct side of power converting apparatuses that are adapted to convert DC power into AC power, and in particular to methods for controlling the voltage imbalance on the direct side of three-phase power converting apparatuses.

### PRIOR ART

Power converting apparatuses adapted to convert a DC power into AC power comprise at least one converter that performs said conversion. The quality of the output voltage wave increases with the number of levels that it comprises, although a higher number of levels implies an increase in the complexity of the implementation of the converter, so that, industrial applications are usually based on apparatuses with converters with two or three levels, although the number of levels is now being increased.

The converter comprises a plurality of switches that are switched on or off in a controlled manner in order to provide, in a selective manner, the different voltage levels in the output voltage wave. A voltage wave may be obtained by using different switching patterns for the switches, which provide an average voltage value that is the same in all cases but which provides the voltage levels in a different way, as it is shown for example in the document EP 2312739 A1.

For three-level converters in particular, for example, the apparatus comprises two capacitors in series on the direct side, so that three voltage levels are obtained from a direct voltage: an intermediate level or zero potential at a neutral point of connection of both capacitors; a positive level or positive potential corresponding to the voltage in a capacitor in relation to the neutral point, and a negative level or potential corresponding to the value of the voltage of the other capacitor in relation to the neutral point. The number of levels of the output voltage wave per branch of a converter generally depends on the number of capacitors disposed in series on the direct side, the apparatus comprising more than one neutral point when more voltage levels than three are to be obtained in the output voltage wave in this case, as said apparatus comprises more than two capacitors connected in series on the direct side and the point of connection between each two capacitors corresponds with a neutral point.

It is advisable that the total voltage of the direct side is distributed equally between the various existing capacitors to obtain a correct modulation, an output voltage wave of the converter of good quality being obtained. In multi-level converters, however, the voltages of the capacitors of the direct side may become unbalanced due to the difference in current running toward the different capacitors. An imbalance in these voltages may cause additional harmonic distortion in the alternating voltage output waves of the converter and, therefore, a reduction in their quality. In addition, the imbalance may cause the maximum operating voltage of the switches of the converter (or some of them) to be exceeded, which may result in the destruction of said switches, or even that the maximum voltage of some of the capacitors is exceeded.

Various alternatives for controlling the voltage at the neutral point are known from prior art. Document US 7573732 B2 discloses a power converting apparatus in which the voltage on the direct side is balanced between the different capacitors. The apparatus comprises two capacitors connected at a neutral point, and to balance the voltages at least one additional element is used to absorb or consume the excess power generated at the neutral point. Said element, which may, for example, be a resistance, absorbs or consumes the excess current that runs towards one of the capacitors, so that it allows the voltages of both capacitors to remain balanced.

Document US 5627742 A discloses a power converting apparatus with a three-level converter for converting a direct voltage of the capacitors of the direct side into at least one alternating voltage wave per phase, which comprises two capacitors on the direct side connected at a neutral point, and in which the voltages in the capacitors are balanced without using additional elements. In the apparatus disclosed in this document, in order to obtain the balance a switch pattern used on the switches of the converter is acted on, taking into consideration the initial situation of the voltages in the capacitors and the polarity of the corresponding output current, the output current corresponding in each case to the current of the corresponding phase generated by converter. As a result, at least one of the edges by means of which the level in the output voltage wave of the converter is changed is moved.

### BRIEF DISCLOSURE OF THE INVENTION

It is an object of the invention to provide a method for controlling the voltage imbalance on the direct side of a three-phase power converting apparatus, as described in the claims.

The method is designed to control the voltage imbalance on the direct side of a three-phase power converting apparatus. Apparatuses of this type comprise at least one converter that performs the conversion and a plurality of capacitors disposed in series on the direct side, each point of connection between two capacitors corresponding with a neutral point.

With the method a direct voltage supplied by the capacitors is converted into a multi-level alternating-voltage wave per phase by means of a selective harmonic elimination modulation or SHE modulation, and, during the conversion, the voltage imbalance on the direct side of the apparatus is controlled by means of the control of the direction of a current at at least one neutral point. With the SHE modulation a vector sequence to be applied for each complete period of each voltage wave is obtained. The complete period is divided into a plurality of time intervals and in each time interval a vector of the vector sequence is applied. In some time intervals the corresponding vector of the vector sequence comprises an associated redundant vector, as a result of which a current is generated at the same neutral point in the opposite direction to the direction of the current generated by the corresponding vector of the vector sequence, so that the vector and its redundant vector affect the same neutral point in a different manner. As a result, the direction of the current at the neutral point in said time intervals is controlled by selecting the vector to be applied in the corresponding time interval, between a vector and its associated redundant vector.

During a same period, in at least one of the time intervals where a selection can be made between a vector of the vector sequence and its associated redundant vector, a redundant vector is selected, and in at least another one of the time intervals where a selection can be made between a vector and its associated redundant vector, the corresponding vector of the vector sequence is selected.

The converters comprise a plurality of switches, and each vector of the vector sequence defines specific switching of the switches to obtain the required alternating voltage waves. The use of redundant vectors increases the number of switchings of the switches of the converter, and thanks to the method proposed the increase in the number of switchings necessary in the switches to balance the voltage on the direct side of the apparatus is reduced in an efficient and simple manner. The reduction of switchings involves a reduction in the apparatus' losses, in particular in apparatuses with a converter operating in high-power applications.

It is another object of the invention to provide a three-phase power converting apparatus as described in the claims. The apparatus comprises at least one converter that is adapted to convert a direct voltage into a three-phase alternating voltage by means of a selective harmonic elimination modulation or SHE modulation, there corresponding to each phase an alternating voltage wave, a plurality of capacitors that are disposed in series on the direct side and which supply the direct voltage to the converter, each point of connection between each two capacitors corresponding with a neutral point, and control means. The explanation of the modulation, the vectors, the redundant vectors and the time intervals for the method is also applicable to the apparatus.

The control means are adapted to generate the vector sequence to be applied for a complete period for each voltage wave and to control the voltage imbalance on the direct side of the apparatus during the conversion by means of the control of the direction of a current at the neutral point. For this purpose, said control means are adapted to select a redundant vector in at least one of the time intervals where a selection can be made between a vector of the vector sequence and its associated redundant vector, and to select the corresponding vector of the vector sequence in at least another one of the time intervals where a selection can be made between a vector and its associated redundant vector. The advantages obtained with the apparatus of the invention are similar to those described for the method of the invention.

These and other advantages and characteristics of the invention will be made evident in the light of the drawings and the detailed description thereof.

### DESCRIPTION OF THE DRAWINGS

Figure 1 shows an embodiment of a three-phase power converting apparatus according to the invention, with two capacitors in series on the direct side.
Figure 2 shows a voltage wave of a phase of the apparatus of Figure 1, with three voltage levels.
Figure 3 shows an evolution of a voltage wave in the time interval in which selection between the application of a vector of the vector sequence or its redundant vector is made, and in the adjacent time intervals, in different situations, the application of the redundant vector in one of said situations being delayed.
Figure 4 shows the development of a voltage wave in the time interval in which selection between the application of a vector of the vector sequence or its redundant vector is made, and in the adjacent time intervals, in different situations, the application of the redundant vector in one of said situations being brought forward.

### DETAILED DISCLOSURE OF THE INVENTION

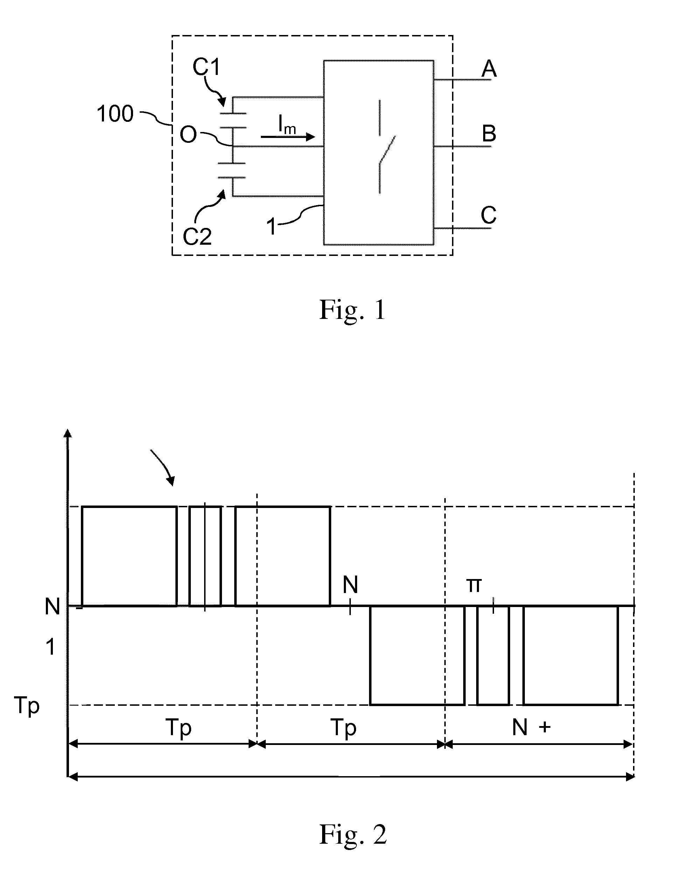

One aspect of the invention relates to a method for controlling the voltage imbalance on the direct side of a three-phase converting apparatus 100. Apparatuses 100 of this type, such as the one shown by way of example in Figure 1, comprise at least one converter 1 that performs the conversion by means of a specific modulation, and a plurality of capacitors C1 and C2 that are disposed in series on the direct side and which supply the direct voltage to the converter 1. Each point of connection between each two capacitors C1 and C2 corresponds with a neutral point O, so that there is a number of neutral points O on the direct side of the apparatus 100 equal to the number of capacitors C1 and C2 minus one. For the purposes of making the description clearer, one neutral point O is referred to, though this is not limiting and the method of the invention may be used in apparatuses 100 that comprise more than one neutral point O.

The converter 1 comprises a plurality of switches not shown in the Figures and preferably an NPC (Neutral Point Clamped) or ANPC (Active Neutral Point Clamped) topology, although a converter 1 with any known topology that can convert the direct voltage into a three-phase alternating voltage may be used. The converter 1 converts a direct voltage supplied by the capacitors C1 and C2 into a three-phase alternating voltage by means of a specific modulation, the output of the converter 1 thus comprising a voltage wave 4 per phase A, B and C. Each voltage wave 4 comprises a plurality of voltage levels, the number of voltage levels depending on the number of capacitors C1 and C2 disposed in series on the direct side of the apparatus 100. In general, each voltage wave 4 comprises a number of voltage levels equal to the number of capacitors C1 and C2 disposed in series on the direct side of the apparatus 100 for the corresponding converter 1 plus one, as shown by way of example in Figure 2, where the development of a voltage wave 4 of a phase A in relation to the neutral point O (voltage V_{AO}) of the apparatus 100 of Figure 1 is represented, which comprises two capacitors C1 and C2. In the example of Figure 2, the voltage wave 4 may thus comprise three voltage levels N + 1, N and N - 1, where the reference N corresponds in this case with an intermediate level or zero potential at the corresponding neutral point O, N + 1 corresponds with a positive level or potential belonging to the voltage in a capacitor C1 in relation to the neutral point O, and N - 1 corresponds with a negative level or potential corresponding to the value of the voltage of the other capacitor C2 in relation to the neutral point O. The switches are opened and closed in a controlled manner in order to provide, in a selective manner, the different voltage levels in the corresponding voltage wave 4.

It is advisable that the total voltage of the direct side is shared equally between the different capacitors C1 and C2 disposed in series on the direct side of the converter 1 to obtain a correct modulation of each phase A, B and C of the apparatus 100, which results in an alternating-voltage wave 4 per phase A, B and C of good quality being obtained. However, in multi-level converters 1 the voltages of the capacitors C1 and C2 of the direct side may become imbalanced due to the difference in current towards the different capacitors C1 and C2 during the conversion. An imbalance in these voltages may cause additional harmonic distortion in the voltage waves 4 and, therefore, a reduction in their quality. In addition, the imbalance may cause the maximum operating voltage of the switches of the converter 1 (or some of them) to be exceeded, which may result in the destruction of said switches, or even in the maximum voltage of some of the capacitors C1 and C2 being exceeded.

The modulation used to perform the conversion is a selective harmonic elimination modulation or SHE modulation. As a result of this type of modulation, a vector sequence to be applied on the switches of the converter 1 for each complete period T of each voltage wave 4 is obtained, which defines the opening and closure times of said switches in said period T, and the voltage wave 4 is dependent on the vector sequence applied. For the purposes of clarity, the vector sequence obtained with the modulation is hereinafter referred to as the original vector sequence.

The SHE modulation, which is not detailed because it is already known and used in the prior art, originates from some preset angles that define a change of voltage level in the corresponding voltage wave 4, so that each edge of the voltage wave 4 corresponds with an angle, an edge being understood as the transition of the voltage wave 4 in moving from one voltage level to another. With reference to the example shown in Figure 2, in this case three angles α₁, α₂ and α₃ have been selected. The three angles α₁, α₂ and α₃ selected belong to the first quadrant of the period T, and, as it is known in the prior art, the angles in the rest of quadrants are determined by these three. Thus, in the example of Figure 2 the angles in the second quadrant would be Π-α₃, Π-α₂ and Π-α₁; in the third quadrant they would be Π+α₁, Π+α₂ and Π+α₃; and in the fourth quadrant they would be 2Π-α₃, 2Π-α₂ and 2Π-α₁.

The period T is divided into a plurality of time intervals Xₙ, where n corresponds with a positive whole number, and with each time interval Xₙ corresponding with the preset application time of the modulation in order to apply a corresponding vector of the original vector sequence. Each time interval Xₙ has a duration that is a result of the modulation, so that the duration of the different time intervals Xₙ does not generally coincide, some vectors being capable of being applied for more time than others, for example. Some vectors of the original vector sequence comprise an associated redundant vector, as a result of which, in the corresponding time interval Xₙ and in the case of being applied, a current Iₘ is generated at the neutral point O in the opposite direction to the direction of the current Iₘ at the same neutral point O generated with the application of the vector of the associated original vector sequence.

During the conversion the voltage imbalance on the direct side of the apparatus 100 is controlled by means of the control of the direction of the current Iₘ at the neutral point O, and the control is performed by selecting the vector to be applied between a vector of the original vector sequence and its associated redundant vector in at least one time interval Xₙ of the period T in which it is possible to perform said selection.

With the method of the invention, during a same period T in at least one of the time intervals Xₙ where a selection can be made between a vector of the original vector sequence and its associated redundant vector, a redundant vector is selected, and in at least another one of the time intervals Xₙ where a selection can be made between a vector of the original vector sequence and its associated redundant vector the vector of the original vector sequence is selected.

The use of redundant vectors implies an increase in the number of switchings of the switches of the converter 1, and thanks to the proposed method the increase in the number of switchings required in the switches to balance the voltage on the direct side of the apparatus 100 in a simple and efficient manner is reduced owing to the fact that its use is reduced. The reduction of switchings involves a reduction in the apparatus' losses, in particular in apparatuses 100 with a converter 1 operating in high-power applications.

In a first embodiment, the selection between a vector of the original vector sequence and its associated redundant vector is made by taking two considerations into account.

The first consideration is performed based on the specific sign of the imbalance, and on the phase difference detected between the voltage wave 4 and the output current corresponding to one of the phases A, B and C (the sign of the imbalance does not vary from one phase A, B and C to another). The sign of the imbalance is determined in accordance with which of the capacitors C1 and C2 that shares the neutral point O and whose imbalance is to be controlled comprises a higher voltage in relation to said neutral point O, it being capable of being positive or negative (if both voltages are equal the imbalance is nil and, therefore, its sign also). For example, the imbalance is positive if the upper capacitor C1 comprises a higher voltage in relation to the neutral point O than the lower capacitor C2, and negative if the opposite is the case. Obviously, it may also be understood that the imbalance is positive if the lower capacitor C2 comprises a higher voltage in relation to the neutral point O than the upper capacitor C1, and negative if the opposite is the case.

The second consideration is performed based on pre-stored information. Although it may also comprise more types of data, the pre-stored information preferably comprises only the following three types of data:
1. The time intervals Xₙ inside a period T on which a vector comprises an associated redundant vector. As a result, it is possible to know beforehand the positions inside the period T in which a selection of vectors to be applied in order to attempt to control the imbalance may be made.
2. The manner in which the possible redundant vectors affect the corresponding neutral point O. If there are more than one neutral point O some affect one neutral point O and others another neutral point O, for example. In order to determine the manner in which a redundant vector affects a neutral point O different possible values of phase difference between the corresponding voltage wave 4 and the output current at at least one phase A, B or C combined with the possible signs of the imbalance are taken into consideration. By means of previous calculations and simulations, for example, the manner in which a redundant vector affects a neutral point O is determined, it being determined if it causes an increase or reduction of the imbalance and to what extent, if it causes its elimination, or if it keeps it constant (does not affect it), each of the different phase differences between the predetermined voltage wave 4 and the corresponding output current combining with a positive sign of the imbalance on one hand and with a negative sign of the imbalance on the other (if it is nil, it is not necessary to control it and, therefore, the original vector sequence is applied as obtained from the modulation, without the need to perform any selection).
3. The most effective and least effective redundant vectors in a period T. A redundant vector is considered more effective the greater the effect it has on a neutral point O in the required direction, and less effective the lesser the required effect it has on the neutral point O in said required direction.

As commented above, the sign of the real imbalance of the neutral point O (or all the neutral points O if there is more than one) and the real phase difference between the corresponding voltage wave 4 and the output current at at least one phase A, B and C (the phase difference is the same in all the phases A, B and C) are detected. Based on these detections the manner in which the redundant vectors affect the corresponding neutral point O is determined by accessing the stored information associated to the sign of the imbalance and to the phase difference obtained as a result of the detections. The information may be stored as a table, for example, and knowledge of the sign and the real phase difference provides access to said information and that associated to the sign and the phase difference obtained as a result of the detections is selected.

In a period T, in order to control the imbalance at the neutral point O, at least one vector of the original vector sequence associated to one of the redundant vectors specified as the least effective and a redundant vector from among those specified as the most effective is selected. Thanks to the prior storage, in addition to reducing the switchings of the switches of the converter 1, as commented above, with the method of the invention the loss of effectiveness in the control of the imbalance is avoided or reduced, given that although efficiency may be lost as not all the redundant vectors that may improve control of the imbalance are applied, the ones that are used are those that influence said improvement the most.

The redundant vectors may also be grouped into two different groups: a first group that includes the redundant vectors specified as the most effective, which are those that affect the neutral point O whose imbalance is to be controlled with a current Iₘ in the required direction, and a second group that includes the redundant vectors specified as the least effective, which in this case are those that affect the neutral point O whose imbalance is to be controlled with a current Iₘ in the direction opposite to the one required. As a result, for a complete period T the redundant vectors to be applied are selected from among those belonging to the first group. Preferably, in a complete period T only one redundant vector is selected, which preferably corresponds with the most effective redundant vector belonging to the first group of redundant vectors. As a result, the increase in switchings due to the use of redundant vectors in order to control the balance is reduced to the maximum, in the most effective manner possible.

It has been seen that the effects of the redundant vectors are repeated throughout a same period, in other words, although different redundant vectors are applied, the effect of applying a redundant vector at a given time is the same as the effect that is obtained when another redundant vector is applied at another point in a same period T. It has also been seen that in at least the majority of cases the repetition occurs every 120°.

As a result, in a second embodiment each period T of each voltage wave 4 is divided into a plurality of partial periods Tp of the same duration, preferably 120°, and it is determined which redundant vectors are the most effective and which the least effective in each partial period Tp of a same period T of each voltage wave 4. The manner in which the redundant vectors and the vectors of the original vector sequence in each period Tp may be applied is similar to the different alternatives commented for the complete period T in the first embodiment, so that in an alternative of the second embodiment a single redundant vector is applied in each partial period Tp, the one determined as the most effective in each case. In addition, in another alternative of the second embodiment, only one redundant vector of one of the partial periods Tp selected from among the redundant vectors determined as the most effective of said partial period Tp is selected, said redundant vector preferably corresponding as the most effective. Preferably, in addition, the redundant vector selected is a redundant vector of the first partial period Tp. The advantages commented in the first embodiment are also achieved in the second embodiment of the method of the invention.

Each vector of the original vector sequence and the possible redundant vectors affect each phase A, B and C in a specific manner, the voltage wave 4 of each phase A, B and C comprising a voltage level in relation to the neutral point O, between the possible voltage levels, which are determined in accordance with the vector that is applied at each point. As mentioned above, the possible voltage levels are determined by the number of capacitors the apparatus 100 comprises on the direct side.

With the method, in any of its embodiments, after it is determined in which time interval Xₙ a redundant vector is to be applied, the voltage level that each voltage wave 4 would have when the redundant vector is applied in the time interval Xₙ in which the redundant vector would be applied is estimated, in the two time intervals Xₙ₋₁ and Xₙ₋₂ immediately before that of the application of the vector, and in the two time intervals Xₙ₊₁ and Xₙ₊₂ immediately after that of the application of the redundant vector. Two comparisons are then made: in a first comparison the estimated level for each voltage wave 4 in the time interval Xₙ₋₁ immediately preceding that of the application of the redundant vector is compared with the estimated level in the time interval Xₙ of the application of the redundant vector and in the time interval Xₙ₋₂ immediately prior to the time interval Xₙ₋₁ immediately prior to that of the application of the redundant vector, and in a second comparison the estimated level of each voltage wave 4 in the time interval Xₙ₊₁ immediately after that of the application of the redundant vector is compared with the estimated level in the time interval Xₙ of the application of the redundant vector and in the time interval Xₙ₊₂ immediately after the time interval Xₙ₊₁ immediately after that of the application of the redundant vector. Both comparisons may take place simultaneously or one before the other, the first comparison being capable, in this last case, of taking place first of all, for example.

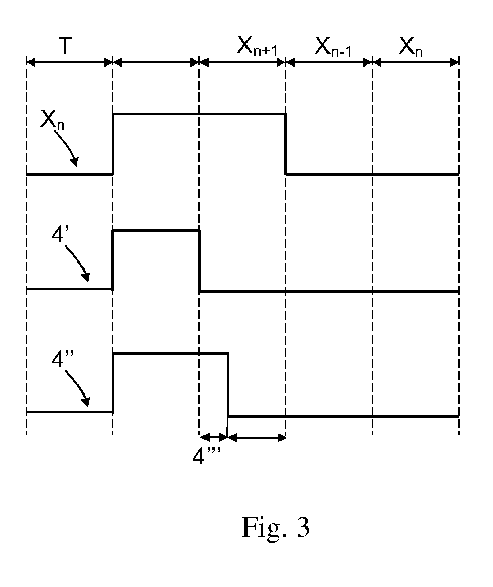

If as a result of the first comparison it is determined that in the time interval Xₙ₋₁ the estimated voltage level in at least one of the voltage waves 4 is different to the estimated voltage level of the other two time intervals Xₙ and Xₙ₋₂ which is compared with, the duration of said time interval Xₙ₋₁ is compared with a predetermined commutation time of the converter 1. Depending on the converter 1 used, in particular on the switches that comprise said converter 1, the response or switching time in the event of a change in the status of a switch may vary and a minimum switching time necessary for the switches to give it time to change shape is predetermined. As a result, if the duration of the time interval Xₙ₋₁ is shorter than the switching time predetermined for the converter 1 in question, the start of the application of the redundant vector determined inside the corresponding time interval Xₙ is delayed, so that the time interval Xₙ of the application of the redundant vector is divided into a first interval Xₙ₁ where the vector corresponding to the time interval Xₙ of the original vector sequence is applied, and into a second interval Xₙ₂ where the associated redundant vector is applied, the sum of the two time intervals Xₙ₋₁ and Xₙ₁ being at least equal to the minimum commutation time. Figure 3 shows by way of example a development of a voltage wave 4', 4" and 4'" in the time intervals Xₙ₋₂, Xₙ₋₁, Xₙ, Xₙ₊₁ and Xₙ₊₂, for the same original vector sequence but for different circumstances:
- The voltage wave 4' relates to the resulting voltage wave in the time intervals Xₙ₋₂, Xₙ₋₁, Xₙ, Xₙ₊₁ and Xₙ₊₂ when the vectors of the original vector sequence are applied.
- The voltage wave 4" relates to the resulting voltage wave in the time intervals Xₙ₋₂, Xₙ₋₁, Xₙ, Xₙ₊₁ and Xₙ₊₂ when the vectors of the original vector sequence are applied in the time intervals Xₙ₋₂, Xₙ₋₁, Xₙ₊₁ and Xₙ₊₂ and when the redundant vector is applied in the time interval Xₙ.
- The voltage wave 4'" relates to the resulting voltage wave in the time intervals Xₙ₋₂, Xₙ₋₁, Xₙ, Xₙ₊₁ and Xₙ₊₂ when the vectors of the original vector sequence are applied in the time intervals Xₙ₋₂, Xₙ₋₁, Xₙ₊₁ and Xₙ₊₂ and when the redundant vector is applied in the time interval Xₙ with a delay. In this case it is interpreted that the duration of the time interval Xₙ₋₁ is shorter than the switching time, as a result of which the start of the application of the redundant vector in the time interval Xₙ is delayed, as commented above.

If as a result of delaying the application of the redundant vector it is estimated that at least one voltage wave 4 comprises a voltage level in the first interval Xₙ₁ different to the voltage level in the immediately preceding time interval Xₙ₋₁, the corresponding vector of the original vector sequence to be applied is modified so that said difference is not generated.

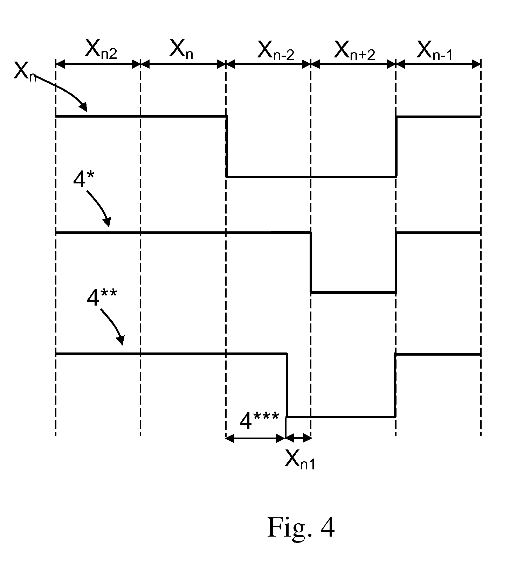

If as a result of the second comparison it is determined that in the time interval Xₙ₊₁ the estimated voltage level in at least one of the voltage waves 4 is different to the estimated voltage level of the other two time intervals Xₙ and Xₙ₊₂ with which it is compared, the duration of said time interval Xₙ₊₁ is compared with a switching time of the predetermined converter 1, as commented above. As a result, if the duration of the time interval Xₙ₊₁ is shorter than the switching time predetermined for the converter 1 in question, the end of the application of the redundant vector inside the corresponding time interval Xₙ is brought forward, so that the time interval Xₙ of the application of the redundant vector is divided into a first interval Xₙ₁ where the associated redundant vector is applied and into a second interval Xₙ₂ where the corresponding vector is applied to the time interval Xₙ of the original vector sequence, the sum of the two time intervals Xₙ₂ and Xₙ₊₁ being at least equal to the minimum switching time. Figure 4 shows by way of example a development of a voltage wave 4*, 4** and 4*** in the time intervals Xₙ₋₂, Xₙ₋₁, Xₙ, Xₙ₊₁ and Xₙ₊₂, for the same vector sequence but for different circumstances:
- The voltage wave 4* relates to the resulting voltage wave in the time intervals Xₙ₋₂, Xₙ₋₁, Xₙ, Xₙ₊₁ and Xₙ₊₂ when the vectors of the original vector sequence are applied.
- The voltage wave 4** relates to the resulting voltage wave in the time intervals Xₙ₋₂, Xₙ₋₁, Xₙ, Xₙ₊₁ and Xₙ₊₂ when the vectors of the original vector sequence are applied in the time intervals Xₙ₋₂, Xₙ₋₁, Xₙ₊₁ and Xₙ₊₂ and when the redundant vector is applied in the time interval Xₙ.
- The voltage wave 4*** relates to the resulting voltage wave in the time intervals Xₙ₋₂, Xₙ₋₁, Xₙ, Xₙ₊₁ and Xₙ₊₂ when the vectors of the original vector sequence are applied in the time intervals Xₙ₋₂, Xₙ₋₁, Xₙ₊₁ and Xₙ₊₂ and when the redundant vector is applied in the time interval Xₙ, the end of the application of said redundant vector being brought forward. In this case it is interpreted that the duration of the time interval Xₙ₊₁ is shorter than the switching time, as a result of which the end of the application of the redundant vector in the time interval Xₙ is brought forward, as commented above.

As occurs when the application of the redundant vector is delayed, if as a result of bringing forward the end of the application of the redundant vector it is estimated that at least one voltage wave 4 comprises a voltage level in the second interval Xₙ₂ different to the voltage level in the immediately preceding time interval Xₙ₊₁ respectively, the corresponding vector of the original vector sequence to be applied is modified so that said difference is not generated.

In the event that one comparison is made before the other, if as a result of the first comparison the end is brought forward or the start of the application of the redundant vector is delayed, it is not necessary to carry out the other comparison, although it may also be carried out.

A second aspect of the invention relates to a three-phase power converting apparatus 100 comprising at least one converter 1 that is adapted to convert a direct voltage into a three-phase alternating voltage by means of a selective harmonic elimination modulation or SHE modulation, there corresponding to each phase A, B and C an alternating voltage wave 4, a plurality of capacitors C1 and C2 that are disposed in series on the direct side and which supply the direct voltage to the converter 1, each point of connection between each two capacitors C1 and C2 corresponding with a neutral point O, and control means that are adapted to carry out the aforementioned method in any of its embodiments. The control means may correspond with a microcontroller, a microprocessor, an FPGA or an equivalent device capable of carrying out data processing. The apparatus 100 also comprises detection means, not shown in the Figures, to detect the phase difference between the corresponding voltage wave 4 and the output current at at least one phase A, B and C, and to detect the voltage in relation to a neutral point O of the capacitors C1 and C2 that share said neutral point O, it being capable of comprising detection means (sensors, for example) for each detection or detection means adapted to carry out both detections. The control means are adapted to determine the sign of the imbalance based on the detection of the voltage in relation to a neutral point O on the capacitors C1 and C2 that share said neutral point O performed by the corresponding detection means.

The apparatus 100 also comprises storage means, not shown in the Figures, where the information necessary to carry out the aforementioned method is stored beforehand. Said information corresponds with the information commented beforehand for the method. The advantages described above for the method are also obtained by the apparatus 100 of the invention.

## Claims

1. Method for controlling the voltage imbalance on the direct side of a three-phase power converting apparatus, comprising at least one converter (1) and a plurality of capacitors (C1, C2) disposed in series on the direct side, each point of connection between each two capacitors (C1, C2) corresponding with a neutral point (O), in which a direct voltage supplied by the capacitors (C1, C2) is converted into a multi-level alternating-voltage wave (4) per phase (A, B, C) by means of a selective harmonic elimination modulation or SHE modulation, as a result of which a vector sequence to be applied for a complete period (T) for each voltage wave (4) is obtained, the period (T) being divided into a plurality of time intervals (Xₙ) and a vector of the vector sequence being applied in each time interval (Xₙ), some vectors of the vector sequence comprising an associated redundant vector as a result of which a current (Iₘ) is generated at the neutral point (O) in the opposite direction to the direction of the current (Iₘ) generated by the vector of the vector sequence at said neutral point (O), and, during the conversion, the voltage imbalance on the direct side of the apparatus (100) is controlled by means of the control of the direction of a current (Iₘ) at at least one neutral point (O), the direction of the current (Iₘ) being controlled with a selection of the vector to be applied between a vector and its associated redundant vector in at least one time interval (Xₙ), **characterised in that** during a same period (T), in at least one of the time intervals (Xₙ) where a selection can be made between a vector of the vector sequence and its associated redundant vector, a redundant vector is selected, and in at least another one of the time intervals (Xₙ) where a selection can be made between a vector and its associated redundant vector, the corresponding vector of the vector sequence is selected.

2. Method according to claim 1, wherein the selection between a vector and its associated redundant vector is performed, on the one hand, based on the specific sign of the imbalance which is determined in accordance with which of the capacitors (C1, C2) that share the neutral point (O) comprises a higher voltage in relation to the neutral point (O), and to the phase difference detected between the voltage wave (4) and the output current corresponding to a phase (A, B, C), and, on the other, based on stored information that comprises the time intervals (Xₙ) in which a vector comprises an associated redundant vector, and the manner in which the redundant vectors affect the neutral point (O), taking into consideration a combination between different possible phase differences between the voltage wave (4) and the output current corresponding to at least one phase (A, B, C) with the possible signs of the imbalance, the most and least effective redundant vectors being determined, a redundant vector being more effective in a period (T) the greater the effect it has on a neutral point (O) in the required direction, and there being selected in a period (T), in order to control the imbalance at the neutral point (O), at least one vector of the vector sequence associated to one of the redundant vectors specified as the least effective and at least one redundant vector between those specified as the most effective.

3. Method according to claim 2, wherein the redundant vectors specified as the least effective are those affecting the neutral point (O) whose imbalance is to be controlled with a direction of the current (Iₘ) at said neutral point (O) opposite to that required, the redundant vectors specified as the most effective being those that affect the neutral point (O) whose imbalance is to be controlled with the required direction of the current (Iₘ) at said neutral point (O).

4. Method according to claim 3, wherein for a complete period (T) one redundant vector is selected only, said redundant vector being selected from the most effective redundant vectors.

5. Method according to claim 4, wherein each period (T) of each voltage wave (4) is divided into a plurality of partial periods (Tp) of the same duration, and wherein it is determined which redundant vectors are the most effective and which the least in each partial period (Tp) of a same period (T) of each voltage wave (4), there being applied for a complete period (T) only one redundant vector of one of the partial periods (Tp) selected from the redundant vectors as the most effective of said partial period (Tp).

6. Method according to claim 5, wherein each partial period (Tp) is of 120°, each complete (T) period comprising three partial periods (Tp).

7. Method according to any of claims 3 to 6, wherein the sign of the real imbalance of at least one neutral point (O) and the real phase difference between the voltage wave (4) and the output current corresponding to each phase (A, B, C) are detected, and, based on the detections, the effect of the redundant vectors on the corresponding neutral point (O) is determined by accessing the stored information associated to the sign of the imbalance and to the phase difference obtained as a result of the detections.

8. Method according to any of the preceding claims, wherein after determining in which time interval (Xₙ) the redundant vector is to be applied, the voltage level that each voltage wave (4) would have when the redundant vector is applied is estimated, in the time interval (Xₙ) in which the redundant vector would be applied and in the two time intervals (Xₙ₋₁, Xₙ₋₂) immediately preceding that of the application of the redundant vector, the voltage level of each voltage wave (4) in the time interval (Xₙ₋₁) immediately preceding that of the application of the redundant vector is compared with the voltage levels in the time interval (Xₙ) of the application of the redundant vector and in the time interval (Xₙ₋₂) immediately preceding that of the time interval (Xₙ₋₁) immediately preceding that of the application of the redundant vector, and, if it is determined that in the time interval (Xₙ₋₁) immediately preceding that of the application of the redundant vector the voltage level is different to the voltage levels of the other two time intervals (Xₙ, Xₙ₋₂) which is compared with, the duration of said time interval (Xₙ₋₁) is compared with a predetermined minimum switching time of the converter (1), the start of the application of the redundant vector being delayed, in the corresponding time interval (Xₙ), if said duration is shorter than said switching time, so that the time interval (Xₙ) of the application of the redundant vector is divided into a first interval (Xₙ₁) where the corresponding vector of the vector sequence is applied and into a second interval (Xₙ₂) where the associated redundant vector is applied, the sum of the first interval (Xₙ₁) and the time interval (Xₙ₋₁) immediately preceding that of the application of the redundant vector being at least equal to the minimum switching time.

9. Method according to claim 8, wherein if as a result of delaying the application of the redundant vector it is estimated that at least one voltage wave (4) comprises a voltage level in the first interval (Xₙ₁) different to the voltage level in the immediately preceding time interval (Xₙ₋₁), the corresponding vector of the vector sequence to be applied is modified so that said difference is not generated.

10. Method according to any of claims 1 to 9, wherein after determining in which time interval (Xₙ) the redundant vector is going to be applied, the voltage level of each voltage wave (4) in the time interval (Xₙ) in which the redundant vector is going to be applied is estimated, and in the two time intervals (Xₙ₊₁, Xₙ₊₂) immediately after that of the application of the redundant vector, the voltage level of each voltage wave (4) in the time interval (Xₙ₊₁) immediately after that of the application of the redundant vector is compared with the voltage levels in the time interval (Xₙ) of the application of the redundant vector and in the time interval (Xₙ₊₂) immediately after the time interval (Xₙ₊₁) immediately after that of the application of the redundant vector, and, if it is determined that in the time interval (Xₙ₊₁) immediately after that of the application of the redundant vector the voltage level is different to the voltage levels of the other two time intervals (Xₙ, Xₙ₊₂) which is compared with, the duration of said time interval (Xₙ₊₁) is compared with a predetermined minimum switching time of the converter (1), the end of the application of the redundant vector being brought forward, in the corresponding time interval (Xₙ), if said duration is shorter than said switching time, so that the time interval (Xₙ) of the application of the redundant vector is divided into a first interval (Xₙ₁) where the redundant vector is applied and into a second interval (Xₙ₂) where the corresponding associated vector of the vector sequence is applied, the sum of the second interval (Xₙ₂) and the time interval (Xₙ₊₁) immediately after that of the application of the redundant vector being at least equal to the minimum switching time.

11. Method according to claim 10, wherein if as a result of bringing forward the application of the redundant vector it is estimated that at least one voltage wave (4) comprises a voltage level in the second interval (Xₙ₂) different to the voltage level in the time interval (Xₙ₊₁) immediately after it respectively, the corresponding vector of the vector sequence to be applied is modified so that said difference is not generated.

12. Three-phase power converting apparatus comprising at least one converter (1) that is adapted to convert a direct voltage into a three-phase alternating voltage by means of a selective harmonic elimination modulation or SHE modulation, there corresponding to each phase (A, B, C) an alternating voltage wave (4), a plurality of capacitors (C1, C2) that are disposed in series on the direct side and which supply the direct voltage to the converter (1), each point of connection between each two capacitors (C1, C2) corresponding with a neutral point (O), and control means that are adapted to generate a vector sequence to be applied for a complete period (T) for each voltage wave (4) and to control the voltage imbalance on the direct side of the apparatus (100) during the conversion by means of the control of the direction of a current (Iₘ) at at least one neutral point (O), the period (T) being divided into a plurality of time intervals (Xₙ) and a vector of the vector sequence being applied in each time interval (Xₙ), and some vectors of the vector sequence comprising an associated redundant vector, as a result of which a current (Iₘ) is generated at the neutral point (O) in the opposite direction to the direction of the current (Iₘ) generated by the vector of the vector sequence at said neutral point (O), **characterised in that** the control means are adapted in order to carry out the method according to any of the preceding claims.

13. Apparatus according to claim 12, comprising detection means to detect the phase difference between the voltage wave (4) and the output current corresponding to at least one phase (A, B, C), and to detect the voltage in respect of the neutral point (O) of the capacitors (C1, C2) that share said neutral point (O).
